Europäisches Patentamt

European Patent Office

Office européen des brevets

(11) Veröffentlichungsnummer : **0 023 582**
**B1**

# (12) EUROPÄISCHE PATENTSCHRIFT

(45) Veröffentlichungstag der Patentschrift :
15.12.82

(21) Anmeldenummer : **80103834.0**

(22) Anmeldetag : **05.07.80**

(51) Int. Cl.³ : **B 01 D 15/08, G 01 N 31/08**

(54) **Säule für die Hochdruckflüssigkeitschromatographie und deren Verwendung.**

(30) Priorität : **31.07.79 DE 2930962**

(43) Veröffentlichungstag der Anmeldung :
**11.02.81 (Patentblatt 81/06)**

(45) Bekanntmachung des Hinweises auf die Patenterteilung : **15.12.82 Patentblatt 82/50**

(84) Benannte Vertragsstaaten :
**BE CH DE FR GB IT LI NL SE**

(56) Entgegenhaltungen :
DE-A-2 524 751
GB-A-1 354 426

(73) Patentinhaber : **Merck Patent Gesellschaft mit beschränkter Haftung**
**Frankfurter Strasse 250**
**D-6100 Darmstadt (DE)**

(72) Erfinder : **Gunkel, Werner, Ing. grad.**
**Wingertsweg 33**
**D-6101 Rossdorf 2 (DE)**
Erfinder : **Eisenbeiss, Friedhelm, Dr. Dipl.-Chem.**
**Georg-Büchner-Strasse 11**
**D-6103 Griesheim (DE)**

Säule für die Hochdruckflüssigkeitschromatographie und deren Verwendung

Die Erfindung betrifft eine Säule für die Hochdruckflüssigchromatographie, bestehend aus einer mit Sorptionsmittel zu füllenden Glassäule, die unter Einhaltung eines Zwischenraumes konzentrisch von einem Druckrohr umgeben ist.

Solche Säulen sind z.B. aus der DE-U-71 46 039, der DE-A-23 29 286 und der DE-B-25 24 751 bekannt. Bei diesen bekannten Säulen wird durch eine Verbindung des Zwischenraums mit dem Zulauf des Eluens der Zwischenraum zwischen der Glassäule und dem Druckrohr mit dem zur chromatographischen Trennung verwendeten Eluens als Druckflüssigkeit gefüllt, so daß der von außen auf die Glassäule wirkende Druck gleich bzw. größer als der im Innern der Säule ist und es so nicht zum Bersten der Glassäule kommen kann. Es ist dabei auch vorgeschlagen worden, den Zwischenraum gegen die Säulenenden so abzudichten, daß es zu keiner Vermischung des im Zwischenraum enthaltenen Eluens mit dem am Säulenkopf eintretenden Eluens kommen kann.

In der DE-A-23 29 286 ist dies so gelöst, daß die Säulenenden mit O-Ringen gegen den Zwischenraum abgedichtet sind, was den Nachteil hat, daß die Glassäule mit minimaler Toleranz präzis auf die Länge des Druckrohrs abgestimmt sein muß.

In der DE-B-25 24 751 wird daher vorgeschlagen, die Glassäule stopfbuchsenartig gegen den Zwischenraum abzudichten, wodurch auch größere Längenunterschiede der Glassäule toleriert werden können. Als stopfbuchsenartige Dichtungen werden dabei PTFE-Dichtungen verwendet. Diese sind zwar gegen das im Zwischenraum befindliche Eluens resistent, sind aber relativ wenig elastisch, so daß die damit auszugleichenden Durchmessertoleranzen der Glassäule nur gering sein dürfen. Durch diese stopfbuchsenartigen Umfangdichtungen gestaltet sich auch ein Wechsel der Glassäule sehr schwierig. Es müssen dazu nämlich die Verschraubungen an beiden Enden des Druckrohrs gelöst werden, und es muß zumindest eine der beiden fest auf das Glasrohr aufgepreßten stopfbuchsenartigen Dichtungen entfernt werden, um die Glassäule aus dem Druckrohr herausziehen zu können. Ein weiterer Nachteil dieser Konstruktion besteht darin, daß zwischen dem Ende der Säule und der Verschraubung des Druckrohrs ein Freiraum vorgesehen ist, um Längentoleranzen der Säule auszugleichen. Dies bedeutet, daß die Säule in Längsrichtung nicht fest eingespannt ist, so daß sich sehr leicht Undichtigkeiten an den zwangsläufig nur relativ locker eingepaßten Zu- and Abflußkapillaren ergeben können.

Es bestand deshalb die Aufgabe, eine Säule für die Hochdruckflüssigchromatographie zu finden, wobei sowohl durch die Verwendung von einfachen Kopfdichtungen ein leichter Wechsel der Glassäule möglich ist, als auch Glassäulen mit großen Toleranzen sowohl im Durchmesser als auch in der Länge verwendet werden können, und wobei insbesondere die Glassäule mit ihren Abdichtungen nicht in Kontakt mit dem Druckmittel kommt.

Diese Aufgabe wurde durch die vorliegende Erfindung gelöst.

Gegenstand der Erfindung ist demgemäß eine Säule für die Hochdruckflüssigchromatographie, bestehend aus einer mit Sorptionsmittel zu füllenden Glassäule, die unter Einhaltung eines Zwischenraumes konzentrisch von einem Druckrohr umgeben ist, wobei die Glassäule an beiden Enden mit Dichtungen gegen den Zwischenraum abgedichtet ist und das Druckrohr einen Anschlußstutzen zur Zuführung eines Druckmittels besitzt, die dadurch gekennzeichnet ist, daß in dem Zwischenraum eine flexible Membran angeordnet ist, die die Glassäule und die Dichtungen gegen das Druckmittel abdichtet.

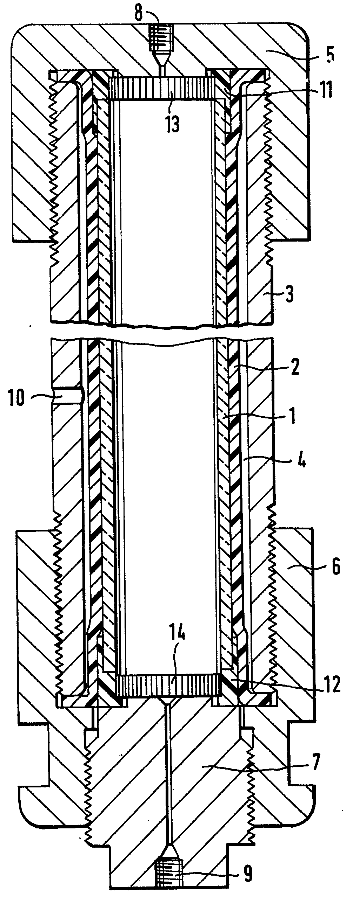

Die Zeichnung zeigt einen Schnitt durch eine bevorzugte Ausgestaltung dieser Säule.

Mit 1 ist darin die Glassäule bezeichnet, mit 2 die flexible Membran und mit 3 das Druckrohr. 4 ist ein Zwischenraum zwischen Druckrohr 3 und flexibler Membran 2. 5 und 6 sind Überwurfmuttern an beiden Enden des Druckrohrs 3. 7 ist ein Schraubstopfen in einer der Überwurfmuttern und 8 und 9 sind Anschlüsse für die Zu- und Abflußkapillaren. 10 ist der Anschlußstutzen für das Druckmittel. 11 und 12 sind Dichtungen an beiden Enden der Säule 1 und 13 und 14 sind Fritten, mit denen die Glassäule 1 verschlossen ist.

Die flexible Membran 2 schließt die Glassäule 1 vollständig gegen das über den Stutzen 10 aufgepreßte Druckmittel ab, so daß keinerlei Einwirkungen des Druckmittels auf die Abdichtungen 11 und 12 zu befürchten sind. Als Druckmittel im Sinne dieser Anmeldung kann jedes fluide Medium verwendet werden, das durch den Anschlußstutzen 10 aufgepreßt werden kann und das dazu dient, den im Innern der Glassäule 1 bestehenden Druck zu kompensieren bzw. sogar einen höheren Außendruck aufzubauen und so ein Bersten der Glassäule 1 wirksam zu verhindern. Es kann dazu das zur chromatographischen Trennung verwendete Eluens mit Hilfe eines T-Stück in der Zulaufkapillare vor dem Säulenkopf entnommen werden. Vorzugsweise wird jedoch ein von der chromatographischen Trennung unabhängiges Medium wie Luft, Wasser, Öl oder ähnliches verwendet, das mit Hilfe einer Pumpe auf die erforderlichen Drücke komprimiert wird. Wenn als Druckmittel Luft oder Wasser verwendet wird, kann die flexible Membran 2 aus praktisch allen elastischen Gummiarten gefertigt sein. Falls als Druckmittel das jeweils zur Chromatographie verwendete Eluens verwendet wird, wird die flexible Membran 2 dagegen vorzugsweise aus PTFE sein. Obwohl dieses Material nur relativ wenig flexibel ist, reicht die Flexibilität doch aus, um den nur 1 bis 2 mm breiten Zwischenraum 4 zu überwinden.

Die flexible Membran 2 ist an beiden Enden des Druckrohrs 3 eingespannt. Vorzugsweise geschieht dies mit den Überwurfmuttern 5 und 6. Um ein leichtes Austauschen der Glassäule 1 zu ermöglichen, ist zumindest eine Mutter mit einer Bohrung versehen, die ihrerseits mit einem Schraubstopfen 7 verschlossen ist. Bei einem Wechsel der Glassäule 1 braucht daher lediglich der Stopfen 7 entfernt zu werden, nicht dagegen die Muttern 5 und 6, die die flexible Membran 2 halten.

Nach Herausnehmen der Säule und Einsetzen der neuen Säule wird dann lediglich der Stopfen 7 wieder eingeschraubt, wobei die Dichtungen 11 und 12 zwischen Glassäule 1 und Mutter 5 bzw. Stopfen 7 zusammengepreßt werden. Um eine nähere Abdichtung der Glassäule 1 zu erhalten, sind die Stirnseiten der Glassäule 1 vorzugsweise plangeschliffen. Durch die erfindungsgemäße Anordnung des Stopfens 7 in der Mutter 6 können auch größere Längentoleranzen der Glassäule 1 durch mehr oder weniger weites Einschrauben des Stopfens 7 ausgeglichen werden.

Zum Betrieb der Säule wird dann lediglich durch den Stutzen 10 das Druckmittel mit einem zumindest dem Innendruck der Glassäule 1 gleichen Druck aufgepreßt. Die zulässigen Betriebsdrücke sind dabei im wesentlichen von der Stabilität des Druckrohrs abhängig und können bis zu mehreren 100 bar betragen.

Da für jeden Säulendurchmesser nur ein einziges aus Edelstahl oder verchromtem Messing gefertigtes Druckrohr benötigt wird, kann der Verbraucher mit relativ geringem finanziellen Aufwand eine Reihe von Glassäulen, z.B. mit unterschiedlichen Füllmaterialien für die verschiedensten Trennprobleme, bevorraten und bei Bedarf in äußerst kurzer Zeit in das Druckrohr einsetzen.

Durch die vorliegende Erfindung steht daher dem Verbraucher eine Chromatographiesäule zur Verfügung, die besonders vorteilhaft in der Hochdruckflüssigchromatographie verwendet werden kann.

**Ansprüche**

1. Säule für die Hochdruckflüssigchromatographie, bestehend aus einer mit Sorptionsmittel zu füllenden Glassäule (1), die unter Einhaltung eines Zwischenraumes (4) konzentrisch von einem Druckrohr (3) umgeben ist, wobei die Glassäule (1) an beiden Enden mit Dichtungen (11, 12) gegen den Zwischenraum (4) abgedichtet ist und das Druckrohr (3) einen Anschlußstutzen (10) zur Zuführung eines Druckmittels besitzt, dadurch gekennzeichnet, daß in dem Zwischenraum (4) eine flexible Membran (2) angeordnet ist, die die Glassäule (1) und die Dichtungen (11, 12) gegen das Druckmittel abdichtet.

2. Säule nach Anspruch 1, dadurch gekennzeichnet, daß die flexible Membran (2) mit Hilfe von Überwurfmuttern (5, 6) an beiden Enden des Druckrohrs (3) eingespannt ist.

3. Säule nach den Ansprüchen 1 und 2, dadurch gekennzeichnet, daß zumindest eine der Überwurfmuttern (6) eine Bohrung mit größerem Durchmesser als die Glassäule (1) aufweist, die durch einen Schraubstopfen (7) verschlossen ist.

4. Verwendung einer Säule nach Anspruch 1 in der Hochdruckflüssigchromatographie.

**Claims**

1. Column for high pressure liquid chromatography consisting of a glass column (1) which is to be filled with the sorbent and is surrounded concentrically, an intermediate space (4) being maintained, by a pressure tube (3), both ends of the glass column (1) being sealed off from the intermediate space (4) by seals (11, 12) and the pressure tube (3) having a connecting nozzle (10) for the supply of a pressure medium characterised in that a flexible membrane (2) is arranged in the intermediate space (4) such that it seals off the glass column (1) and the seals (11, 12) from the pressure medium.

2. Column according to Claim 1, characterised in that the flexible membrane (2) is clamped at both ends of the pressure tube (3) with the aid of union or cap nuts (5, 6).

3. Column according to Claims 1 and 2, characterised in that at least one of the union nuts (6) has a bore with a greater diameter than the glass column (1), which is closed by a screw stopper (7).

4. Use of a column according to Claim 1 in high pressure liquid chromatography.

**Revendications**

1. Colonne pour la chromatographie de liquides sous haute pression, consistant en une colonne de verre (1) à garnir d'un agent sorbant, entourée avec conservation d'un espace intermédiaire (4), par un tube concentrique résistant à la pression (3), l'étanchéité de la colonne de verre (1) à l'égard de l'espace intermédiaire (4) étant réalisée au moyen de joints (11, 12) placés aux deux extrémités de la colonne de verre (1), et le tube résistant à la pression (3) portant une tubulure de raccord (10) pour l'alimentation d'un fluide de compression, cette colonne se caractérisant en ce que dans l'espace intermédiaire (4) on a placé une membrane flexible (2) qui assure l'étanchéité de la colonne de verre (1) et des joints (11, 12) à l'égard du fluide de compression.

2. Colonne selon la revendication 1, caractérisé en ce que la membrane flexible (2) est fixée aux deux extrémités du tube résistant à la pression (3) au moyen d'écrous-chapeaux (5, 6).

3. Colonne selon les revendications 1 et 2, caractérisée en ce que l'un au moins des écrous-chapeaux (6) porte un orifice dont le diamètre est supérieur à celui de la colonne de verre (1), orifice qui est fermé par un bouchon fileté (7).

4. Utilisation d'une colonne selon la revendication 1 dans la chromatographie de liquides sous haute pression.